(19) Europäisches Patentamt
European Patent Office
Office européen des brevets

(11) EP 2 174 397 B1

(12) **EUROPEAN PATENT SPECIFICATION**

(45) Date of publication and mention of the grant of the patent:
**22.12.2010 Bulletin 2010/51**

(21) Application number: **08774209.4**

(22) Date of filing: **23.06.2008**

(51) Int Cl.:
***H02J 3/00*** *(2006.01)*

(86) International application number:
**PCT/EP2008/057931**

(87) International publication number:
**WO 2009/019067 (12.02.2009 Gazette 2009/07)**

# (54) ESTIMATING A TIME OFFSET BETWEEN STATIONARY CLOCKS

SCHÄTZUNG EINES ZEITOFFSET ZWISCHEN STATIONÄREN ZEITGEBERN

ESTIMATION D'UN DÉCALAGE TEMPOREL ENTRE DES HORLOGES STATIONNAIRES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.08.2007 EP 07113845**

(43) Date of publication of application:
**14.04.2010 Bulletin 2010/15**

(73) Proprietor: **ABB Research LTD**
**8050 Zürich (CH)**

(72) Inventors:
- **DZUNG, Dacfey**
  **CH-5430 Wettingen (CH)**
- **LARSSON, Mats**
  **CH-5405 Baden-Dättwil (CH)**

(74) Representative: **ABB Patent Attorneys**
**C/o ABB Schweiz AG**
**Intellectual Property (CH-LC/IP)**
**Brown Boveri Strasse 6**
**CH-5400 Baden (CH)**

(56) References cited:
**EP-A- 1 408 595**

- **ANDREA CARTA ED - ANONYMOUS: "A Flexible GPS-based System for Synchronized Phasor Measurement in Electric Distribution Networks" INSTRUMENTATION AND MEASUREMENT TECHNOLOGY CONFERENCE, 2006. IMTC 2006. PROCEEDINGS OF THE 23RD IEEE, IEEE, PI, 2006, pages 1547-1552, XP031017138 ISBN: 0-7803-9360-0**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The invention relates to the field of time synchronization between two geographically separated stationary clocks, in particular the clocks of the Phasor Measurement Units of a Wide Area Monitoring System for a power transmission network.

BACKGROUND OF THE INVENTION

For the Wide Area Monitoring of power transmission networks, Phasor Measurement Units (PMUs) are installed at distributed locations. The PMU perform sampling of current and voltage waveforms, calculate phasor values from the sampled waveforms, and cyclically send the phasor values to a Network Control Center (NCC) over a wide area communication network. The NCC monitors the status of the power transmission network by comparing *synchronous* phasor measurements received from the distributed locations. Hence synchronicity of phasor measurements is crucial and requires the sampling clocks of the PMUs to be synchronized. To make the system robust against transmission delays and jitter over the communication network, phasor messages transmitted by the PMUs include a timestamp indicating the precise measurement time. Likewise, routers and switches in wide area communication networks are requiring a similar degree of time synchronization.

The wide area synchronization of the distributed PMU clocks is today done using commercial Global Positioning System (GPS) time receivers. However, it is known that propagation and interference problems may degrade or even prevent GPS reception. The surrounding landscape may shadow a particular location from a GPS satellite, or solar wind may affect the reception of GPS signals for some minutes. While navigating vehicles may readily switch to other systems for determining their position, no such alternatives have been implemented today for the time synchronization of stationary clocks.

DESCRIPTION OF THE INVENTION

It is therefore an objective of the invention to improve the time synchronisation of two stationary clocks. This objective is achieved by a method of and a device for estimating a time offset according to the claims I and 7. Further preferred embodiments are evident from the dependent patent claims.

According to the invention, a global time signal from a global time reference or time source in common view is used to calculate a common view based clock offset between two stationary clocks instead of two respective clock offsets between each one of the clocks and the global time reference. In parallel, a network based clock offset between the two clocks is calculated based on messages exchanged over a communication network interconnecting the two clocks and without reverting to the global time reference. The two most recent values of the common view and network based clock offsets are then combined or superposed in a seamless or hitless way to produce a final time offset estimate.

In a preferred variant of the invention, the combination of the independently calculated common view and network based clock offsets is a weighted average of the two values, involving respective weights based on quality estimates of the latter. In an advantageous embodiment of the invention, the calculation of the common view based clock offset and the network based clock offset are updated independently of each other and repeated as frequently as suitable.

In order to combine the time synchronization schemes based on the Global Positioning System (GPS) and the communication network for the stationary clocks of the Phasor Measurement Units (PMUs) of a Wide Area Monitoring System in an optimum manner, the PMU client clocks are synchronized to a central server clock at the Network Control Center (NCC) of the system, rather than to the GPS clock itself In practice, as GPS one-way time distribution - if available and operating - is expected to have higher accuracy than network-based synchronization, the method of the invention will serve mostly as a dynamic back-up using the network whenever the GPS-synchronization fails. While GPS is available, it is used to improve the accuracy of the network-based synchronization, specifically by correcting for transmission jitter and delay asymmetries in the network-based synchronization scheme.

BRIEF DESCRIPTION OF THE DRAWINGS

The subject matter of the invention will be explained in more detail in the following text with reference to preferred exemplary embodiments which are illustrated in the attached drawings, in which:

Fig.1 schematically shows a Wide Area Monitoring System,
Fig.2 depicts basic clock relationships, and

Fig.3 shows a message sequence chart according to the invention.

The reference symbols used in the drawings, and their meanings, are listed in summary form in the list of reference symbols. In principle, identical parts are provided with the same reference symbols in the figures.

DETAILED DESCRIPTION OF PREFERRED EMBODIMENTS

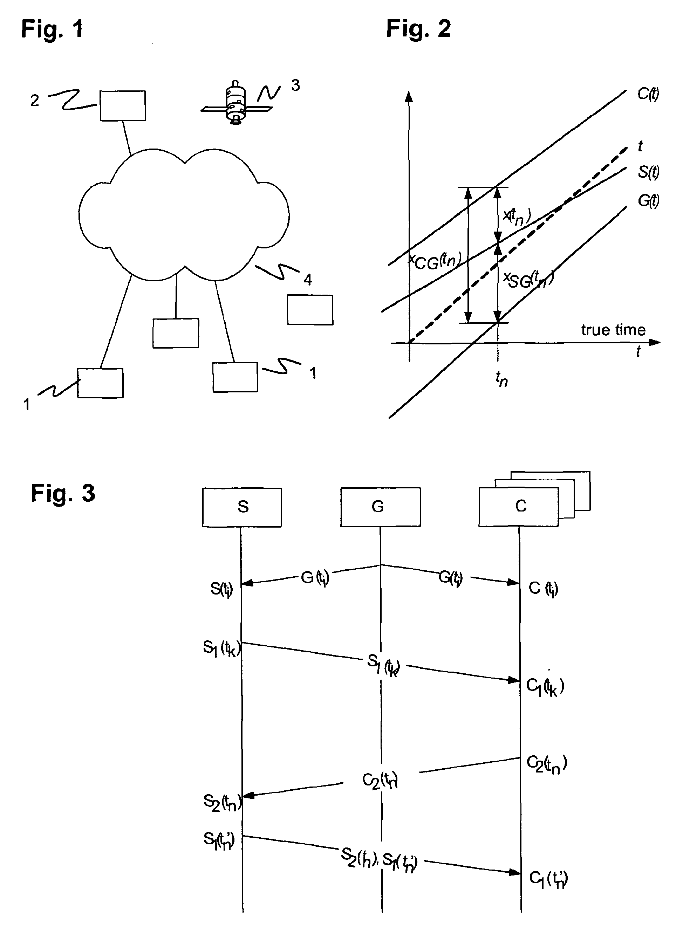

Fig.1 shows a Wide Area Monitoring system for a power transmission network, with several Phasor Measurement Units (PMUs) installed at distributed locations. The PMU calculate phasor values and cyclically send these to a Network Control Center (NCC) over a wide area communication network. A satellite of a Global Positioning System (GPS) broadcasts global time signals. Any clock at one of the PMUs, i.e. the client or slave clock C, need to be synchronized with the clock at the NCC, i.e. the server or master clock S.

Fig.2 depicts the clock relationships. The clock of a PMU *C(t)* is characterized by

$$C(t) = \phi_C \cdot t + \theta_C \qquad (1)$$

where $\theta_c$ is the time offset, $\phi_C \cdot t$ is the clock drift, and *t* denotes true time. Similarly, for the clock *S(t)* of the NCC,

$$S(t) = \phi_S \cdot t + \theta_S . \qquad (2)$$

The clocks *C(t)* of the PMU must be synchronized to the clock *S(t)* of the NCC, i.e. the time offset *x(t)* of the PMU clock against the NCC clock must be estimated and then corrected at the client, where

$$x(t) \stackrel{def}{=} C(t) - S(t) = \underbrace{(\phi_C - \phi_S)}_{y(t)} t + (\theta_C - \theta_S) \qquad (3)$$

Here, the term *y(t)* denotes a frequency offset. Practical methods to obtain this offset are:

1. One-way GPS measurements: Both the clients and the server receive time information G(t) broadcast from a common source, in practice from a GPS satellite. The receive times measured by the client and the server are *C'(t)* and *S'(t),* respectively, for which

$$C'(t) = G(t) + x_{CG}(t) + d_{GC} \qquad (4)$$

$$S'(t) = G(t) + x_{SG}(t) + d_{GS} \qquad (5)$$

hold. In (4), $x_{CG}$ is the offset between client and GPS clocks, and $d_{GC}$ is the propagation delay between the GPS satellite and the client. Similar definitions are used in (5). With known relative positions of clocks and satellites, the delays can be compensated, to give the corrected clocks

$$C(t) = C'(t) - d_{GC} \qquad (6)$$

$$S(t) = S'(t) - d_{GS} \qquad (7)$$

By comparison of the values C(t) and G(t), it is then straightforward to obtain $x_{CG}(t)$ = = $C(t) - G(t)$ and $x_{SG}(t) = S(t) - G(t)$. This is the usual way of synchronising PMU clocks. The signal $x_{CG}(t)$ controls the local PMU oscillator which generates 1 pps (one pulse per second) and e.g.10 MHz clock signals, to synchronize PMU sampling and time stamping.

2. <u>Common-view GPS measurements:</u> In many applications it is not necessary or not desired to estimate $x_{CG}(t)$ and $x_{SG}(t)$ individually, but it may be sufficient to obtain the clock offset *x(t)* between client and server. This can be achieved by making use of the fact that the GPS broadcast signal *G(t)* is in their common view. For agreed GPS broadcast times $G(t_i)$, the client and server record the reception times $C(t_i)$ and $S(t_i)$, and exchange these measurements in a non time critical manner over some communication network. The difference of these measurements is

$$C(t_i) - S(t_i) = x_{CG}(t_i) - x_{SG}(t_i) = x_G(t_i) \qquad (8)$$

using (4) to (7) and Fig.2. Here, $x_G(t_i)$ denotes the offset *x(t)* of *C(t)* with respect to *S(t),* as determined by cancelling-out the common GPS measurement $G(t_i)$. Kalman filtering or other averaging techniques could be used to further improve the estimation of *x(t)*,. This common-view method is today's standard method to compare atomic clocks for the definition of the Coordinated Universal Time (UTC).

3. <u>Two-way measurements:</u> Clock client and server perform and exchange time measurements in real-time over a (time critical) communication network, to directly determine the clock offset of the client. Standard two-way time synchronisation protocols are SNTP on the Internet, and IEEE 1588 for devices connected to a LAN. The essential steps are as follows, using IEEE 1588 terminology.

(i) At time $t_n$, the server broadcasts a *Sync* message with timestamp $S_1(t_n)$, which is received by the client at $C_1(t_n)$. Taking into account the message transmission delay $d_{SC}(t)$ of the *Sync* message from the server to the client, the following holds:

$$C_1(t_n) = S_1(t_n) + x(t_n) + d_{SC}(t_n) \qquad (9)$$

where *x(t)* is the offset, to be determined by the two-way method.

(ii) At client time $C_2(t_n)$, the client sends a *Delay_Reguest* message to the server, which is received by the server at time $S_2(t_n)$. The server responds with a *Delay_Response* message which contains the value of $S_2(t_n)$. Similarly to above, with $d_{CS}(t)$ denoting the propagation delay of the *Delay_Reguest* in the reverse direction from client to server,

$$S_2(t_n) = C_2(t_n) - x(t_n) + d_{CS}(t_n) \qquad (10)$$

(iii) The 4 measurements $S_1(t_n)$, $C_1(t_n)$, $C_2(t_n)$, and $S_2(t_n)$ are now available at the client.

Assuming *that the transmission delays are equal,* i.e. $d_{SC}(t) = d_{CS}(t) = d(t)$, the client can solve (9) and (10) for $x(t_n)$, as the desired estimate of the clock offset:

$$d(t_n) = \frac{(C_1(t_n) - S_1(t_n)) + (S_2(t_n) - C_2(t_n))}{2} \qquad (11)$$

$$x_T(t_n) = (C_1(t_n) - S_1(t_n)) - d(t_n) = \frac{(C_1(t_n) - S_1(t_n)) - (S_2(t_n) - C_2(t_n))}{2} \qquad (12)$$

where $x_T(t_n)$ denotes the estimate of the true offset $x(t)$, as obtained by the two-way measurement method at time $t_n$. Methods such as Kalman filtering and averaging may further improve the estimation accuracy of time- and frequency offsets ($x$ and $y$), given a sequence of measurements performed at times $t_n$, $t_{n+1}$, $t_{n+2}$, etc.

This two-way method for time synchronisation relies on the communication network between the clients and server. The communication is time critical in the sense that any stochastic variation and asymmetries in the delays $d_{SC}(t)$ and $d_{CS}(t)$ affect the synchronisation accuracy.

The detailed steps of the procedure are described in the following for a specific PMU client clock node *C* with clock *C(t)*. All PMUs perform the procedure in parallel to synchronize their individual clocks to the central server clock *S(t)* of the server *S*. *S* is typically located at the NCC.

Fig.3 shows a message sequence chart of one round of the proposed procedure.

1. The server clock S(t) is initially free-running (uncontrolled oscillator).
2. The client clock C(t) s initially free-running.
3. If GPS one-way time reception is available at the server *S*, it receives at time $t_i$ the GPS time $G(t_i)$, and records its reception time $S(t_i)$. It may use the GPS time to control its oscillator.
4. The server S broadcasts a *Sync* message to all clients *C*s, cyclically at times $t_k$. The message contains

- timestamp of message transmission $S_1(t_k)$,
- if available from 3., reception time of the GPS time message $S(t_i)$.

5. *C* receives the *Sync* message and also records the message reception time $C_1(t_k)$.
6. If GPS one-way time reception is available at the client *C*, it receives at time $t_i$ the GPS time $G(t_i)$, and records its reception time $C(t_i)$. If available from 4., *C* calculates its clock offset against S, according to the common-view method,

$$x_G(t_i) = C(t_i) - S(t_i)$$

*C* should use successive measurements or other system information, e.g. from the GPS data on satellite health and clock quality to determine the quality of the clock offset estimate $x_G(t_i)$, expressed e.g. by the variance $\sigma_G^2$.
7. *C* sends a *Delay_Request* message to *S*. The message contains

- timestamp of message transmission $C_2(t_n)$.
  and can be combined with a cyclic PMU phasor data message in order to reduce the number of messages and the message overheads on the communication network.

8. *S* receives the *Delay_Request* message and records the message reception time $S_2(t_n)$, and responds with a *Delay_Response* message to *C* (at time $t_n$'). The message contains

- the value of $S_2(t_n)$,
- optionally the timestamp of its own transmission $S_1(t_n')$.

9. *C* receives the *Delay_Response* message, and, if it has received $S_1(t_n')$ in 8., may record the message reception time $C_1(t_n')$.
10. *C* calculates its clock offset against S, as measured by the two-way method, as follows:

$$x_T(t_n) = \frac{(C_1(t_k) - S_1(t_k)) - (S_2(t_n) - C_2(t_n))}{2}$$

As an option, the newer measurement values $S_1(t_n')$ and $C_1(t_n')$ from 9. could be used in place or in combination with $S_1(t_k)$ and $C_1(t_k)$. The client also determines the quality of $x_T(t_n)$, e.g. by estimating the measurement variance $\sigma_T^2$.

11. Finally, $C$ combines the two offset measurements $x_G$ and $x_T$ into the final offset estimate $x(t)$, taking into account their estimated qualities. For example,

$$x(t) = x_G(t_i)\frac{\sigma_T^2}{\sigma_G^2 + \sigma_T^2} + x_T(t_n)\frac{\sigma_G^2}{\sigma_G^2 + \sigma_T^2}$$

The client may finally adjust its clock according to $C(t) \leftarrow C(t) - x(t)$. The final offset estimate is formally derived as a Maximum Likelihood estimate from two independent Gaussian measurements $x_G$ and $x_T$ with variances $\sigma_G^2$ and $\sigma_T^2$. In the practically relevant case where the GPS-derived measurements $x_G$ are much more accurate than $x_T$, due to the network transmission delays and jitter of the latter, i.e. $\sigma_G^2 << \sigma_T^2$, this results simply in $x(t) = x_G(t_i)$. The present procedure allows a seamless or hitless transition between the two offset measurement schemes, if one fails and hence its variance increases.

12. Update times $t_n$, $t_k$ , and $t_i$, and loop cyclically from step 3.

The update of time instances $t_i$ (when GPS time measurements and offset transfer are performed), the times $t_k$ (when the server broadcasts *Sync* messages) and time instances $t_n$ (when the two-way measurement exchange is performed) need not be synchronous. The newest available smoothed measurements should be used in the update algorithms. The update rates of these procedures can be selected based on availability of resources such as processor time and network bandwidth. Higher rates increase accuracy of estimation, at a cost of higher processing and communication load.

In order to accurately measure and correct the *time offset x(t),* the *frequency offset y(t)* of the clocks must also be estimated using successive time offset measurements. The basic assumption is (3), i.e. a linearly increasing clock offset, wherein quadratic models can also be envisaged.

The message transmission delays are subject to stochastic jitter and outliers. The cyclic repetition of the described procedure allows the application of the known smoothing algorithms to improve accuracy. Also, the noise (jitter) variance can be estimated and other method to asses the measurement accuracies employed. For example, large values of the difference $|C_k(t_n) - S_k(t_n)|$ are outliers indicating isolated transmission problems affecting the transmission delays, and should not be used to update the desired clock offset estimates. Recursive estimation algorithms which can interpolate between missing samples, such as temporary loss of GPS reception or outliers in the network delays, can be applied to improve performance.

LIST OF DESIGNATIONS

1 Phasor Measurement Unit (PMU)
2 Network Control Center (NCC)
3 GPS satellite
4 Wide Area Communication Network

## Claims

**1.** Method of estimating a time offset $x$ between first and second stationary clocks $C$, $S$ adapted to receive a global time signal $G$ and interconnected through a communication network (4), comprising

- receiving, by the first and second clock $C$, $S$, a broadcast global time signal $G(t_i)$ from a global time reference (3), and calculating, at the first clock, a common view based clock offset $x_G(t_i)$ between the first and second stationary clocks based on reception times $C(t_i)$, $S(t_i)$ of the global time signal $G(t_i)$,
- exchanging time-critical messages between the first and second clock $C$, $S$ and calculating, at the first clock, a network based clock offset $x_T(t_n)$ between the first and second stationary clocks based on transmission times $S_1(t_k)$, $C_2(t_n)$ and reception times $C_1(t_k)$, $S_2(t_n)$ of the messages, and
- combining the common view based clock offset $x_G(t_i)$ and the network based clock offset $x_T(t_n)$ to estimate

the time offset *x.*

**2.** The method according to claim 1, **characterized in that** it comprises

- estimating a quality $\upharpoonright_G$, $\upharpoonright_T$ for the common view and network based clock offset $x_G(t_i)$, $x_T(t_n)$, and
- combining the two clock offsets by calculating a weighted average *x* based on the estimated qualities $\upharpoonright_G$, $\upharpoonright_T$.

**3.** The method according to claim 1, **characterized in that** the calculation of the common view based clock offset $x_G(t_i)$ comprises

- sending, by the second clock, a message comprising the reception time $S(t_i)$ of the global time signal $G(t_i)$ at the second clock to the first clock in a non-time critical manner.

**4.** The method according to claim 1, **characterized in that** comprises

- updating independently and repeatedly the calculation of the common view based clock offset $x_G(t_i)$ and the network based clock offset $xT(t_n)$.

**5.** The method according to claim 1, **characterized in that** the first clock *C* is a clock of a Phasor Measurement Unit (PMU) of a Wide Area Monitoring System, and that the second clock *S* is the clock at the Network Control Center (NCC) of the Wide Area Monitoring System.

**6.** The method according to claim 5, **characterized in that** the calculation of the network based clock offset $x_T(t_n)$ comprises

- sending a time-critical message including PMU phasor data from the first clock *C* to the second clock *S.*

**7.** Device with a stationary first clock *C* and adapted to receive a global time signal *G* and to exchange messages through a communication network (4), comprising

- means for calculating a common view based clock offset $x_G(t_i)$ between the first clock *C* and a second clock *S* based on reception times $S(t_i)$, $C(t_i)$ of the global time signal $G(t_i)$ at the location of the first and second clock C, S,
- means for calculating a network based clock offset $x_T(t_n)$ between the first clock *C* and the second clock *S* based on transmission times $S_1(t_k)$, $C_2(t_n)$ and reception times $C_1(t_k)$, $S_2(t_n)$ of time-critical messages exchanged between the first and second clock *C, S*, and
- means for combining the common view based clock offset $x_G(t_i)$ and the network based clock offset $x_T(t_n)$ to estimate a time offset *x* between the first clock *C* and the second clock *S.*

## Patentansprüche

**1.** Verfahren zur Schätzung eines Zeitoffset *x* zwischen einem ersten und zweiten stationären Zeitgeber *C, S,* die dafür ausgelegt sind, ein globales Zeitsignal *G* zu empfangen, und durch ein Kommunikationsnetzwerk (4) miteinander verbunden sind, mit den folgenden Schritten:

- Empfangen eines ausgestrahlten globalen Zeitsignals $G(t_i)$ durch den ersten und zweiten Zeitgeber *C, S* von einer globalen Zeitreferenz (3) und Berechnen eines auf gemeinsamer Sicht basierenden Zeitgeberoffset $x_G(t_i)$ in dem ersten Zeitgeber zwischen dem ersten und zweiten stationären Zeitgeber auf der Basis von Empfangszeiten $C(t_i)$, $S(t_i)$ des globalen Zeitsignals $G(t_i)$,
- Austauschen von zeitkritischen Nachrichten zwischen dem ersten und zweiten Zeitgeber *C, S* und Berechnen eines auf dem Netzwerk basierenden Zeitgeberoffset $x_T(t_n)$ in dem ersten Zeitgeber zwischen dem ersten und dem zweiten stationären Zeitgeber auf der Basis der Sendezeiten $S_1(t_k)$, $C_2(t_n)$ und Empfangszeiten $C_1(t_k)$, $S_2(t_n)$ der Nachrichten und
- Kombinieren des auf gemeinsamer Sicht basierenden Zeitgeberoffset $x_G(t_i)$ und des auf dem Netzwerk basierenden Zeitgeberoffset $x_T(t_n)$, um das Zeitoffset *x* zu schätzen.

**2.** Verfahren nach Anspruch 1, **dadurch gekennzeichnet, dass** es die folgenden Schritte umfasst:

- Schätzen einer Qualität $\upharpoonleft_G$, $\upharpoonleft_T$ für das auf gemeinsamer Ansicht und Netzwerk basierende Zeitgeberoffset $x_G(t_i)$, $x_T(t_n)$ und
- Kombinieren der zwei Zeitgeberoffset durch Berechnen eines gewichteten Mittelwerts $x$ auf der Basis der geschätzten Qualitäten $\upharpoonleft_G$, $\upharpoonleft_T$.

**3.** Verfahren nach Anspruch 1, **dadurch gekennzeichnet, dass** die Berechnung des auf gemeinsamer Sicht basierenden Zeitgeberoffset $x_G(t_i)$ Folgendes umfasst:

- Senden einer Nachricht durch den zweiten Zeitgeber, die die Empfangszeit $S(t_i)$ des globalen Zeitsignals $G(t_i)$ in dem zweiten Zeitgeber umfasst, zu dem ersten Zeitgeber auf eine nicht zeitkritische Weise.

**4.** Verfahren nach Anspruch 1, **dadurch gekennzeichnet, dass** es den folgenden Schritt umfasst:

- unabhängiges und wiederholtes Aktualisieren der Berechnung des auf gemeinsamer Sicht basierenden Zeitgeberoffset $x_G(t_i)$ und des auf dem Netzwerk basierenden Zeitgeberoffset $x_T(t_n)$.

**5.** Verfahren nach Anspruch 1, **dadurch gekennzeichnet, dass** der erste Zeitgeber $C$ ein Zeitgeber einer Zeigermesseinheit (PMU) eines großflächigen Überwachungssystems ist und dass der zweite Zeitgeber $S$ der Zeitgeber in der Netzwerksteuerzentrale (NCC) des großflächigen Überwachungssystems ist.

**6.** Verfahren nach Anspruch 5, **dadurch gekennzeichnet, dass** die Berechnung des auf dem Netzwerk basierenden Zeitgeberoffset $x_T(t_n)$ Folgendes umfasst:

- Senden einer PMU-Zeigerdaten enthaltenden zeitkritischen Nachricht von dem ersten Zeitgeber $C$ zu dem zweiten Zeitgeber $S$.

**7.** Einrichtung mit einem stationären ersten Zeitgeber $C$, die dafür ausgelegt ist, ein globales Zeitsignal $G$ zu empfangen und durch ein Kommunikationsnetzwerk (4) Nachrichten auszutauschen, umfassend:

- Mittel zum Berechnen eines auf gemeinsamer Sicht basierenden Zeitgeberoffset $x_G(t_i)$ zwischen dem ersten Zeitgeber $C$ und einem zweiten Zeitgeber $S$ auf der Basis von Empfangszeiten $S(t_i)$, $C(t_i)$ des globalen Zeitsignals $G(t_i)$ an dem Standort des ersten und zweiten Zeitgebers C, S,
- Mittel zum Berechnen eines auf dem Netzwerk basierenden Zeitgeberoffset $x_T(t_n)$ zwischen dem ersten Zeitgeber $C$ und dem zweiten Zeitgeber $S$ auf der Basis von Sendezeiten $S_1(t_k)$, $C_2(t_n)$ und Empfangszeiten $C_1(t_k)$, $S_2(t_n)$ von zwischen dem ersten und zweiten Zeitgeber $C$, $S$ ausgetauschten zeitkritischen Nachrichten und
- Mittel zum Kombinieren des auf gemeinsamer Sicht basierenden Zeitgeberoffset $x_G(t_i)$ und des auf dem Netzwerk basierenden Zeitgeberoffset $x_T(t_n)$, um ein Zeitoffset $x$ zwischen dem ersten Zeitgeber $C$ und dem zweiten Zeitgeber $S$ zu schätzen.

## Revendications

**1.** Procédé d'estimation d'un décalage temporel $x$ entre des première et seconde horloges fixes $C$, $S$ adaptées pour recevoir un signal de temps global $G$ et interconnectées par le biais d'un réseau de communication (4), comprenant

- la réception, par les première et seconde horloges $C$, $S$, d'un signal temporel global diffusé $G(t_i)$ depuis une référence de temps globale (3), et le calcul, au niveau de la première horloge, d'un décalage d'horloge basé sur une vue commune $x_G(t_i)$ entre les première et seconde horloges fixes en fonction des temps de réception $C(t_i)$, $S(t_i)$ du signal de temps global $G(t_i)$,
- l'échange de messages critiques dans le temps entre les première et seconde horloges $C$, $S$ et le calcul, au niveau de la première horloge, d'un décalage d'horloge de réseau $x_T(t_n)$ entre les première et seconde horloges fixes en fonction des temps de transmission $S_1(t_k)$, $C_2(t_n)$ et des temps de réception $C_1(t_k)$, $S_2(t_n)$ des messages, et
- la combinaison du décalage d'horloge basé sur une vue commune $x_G(t_i)$ et du décalage d'horloge de réseau $x_T(t_n)$ pour estimer le décalage temporel $x$.

**2.** Procédé selon la revendication 1, **caractérisé en ce qu'**il comprend

- l'estimation d'une qualité $\upharpoonleft_G$, $\upharpoonleft_T$ du décalage d'horloge basé sur la vue commune et de réseau $x_G(t_i)$, $x_T(t_n)$, et
- la combinaison des deux décalages d'horloge en calculant une moyenne pondérée $x$ en fonction des quantités $\upharpoonleft_G$, $\upharpoonleft_T$ estimées.

3. Procédé selon la revendication 1, **caractérisé en ce que** le calcul du décalage d'horloge basé sur la vue commune $x_G(t_i)$ comprend

- l'envoi, par la seconde horloge, d'un message comprenant le temps de réception $S(t_i)$ du signal de temps global $G(t_i)$ au niveau de la seconde horloge à la première horloge d'une manière non critique dans le temps.

4. Procédé selon la revendication 1, **caractérisé en ce qu'**il comprend

- l'actualisation indépendante et répétée du calcul du décalage d'horloge basé sur la vue commune $x_G(t_i)$ et du décalage d'horloge de réseau $x_T(t_n)$.

5. Procédé selon la revendication 1, **caractérisé en ce que** la première horloge *C* est une horloge d'une Unité de Mesure de Phaseur (PMU) d'un Système de Surveillance étendu, et **en ce que** la seconde horloge *S* est l'horloge au niveau du Centre de Contrôle de Réseau (NCC) du Système de Surveillance étendu.

6. Procédé selon la revendication 5, **caractérisé en ce que** le calcul du décalage d'horloge de réseau $x_T(t_n)$ comprend

- l'envoi d'un message critique dans le temps comportant les données de phaseur PMU par la première horloge *C* à la seconde horloge *S*.

7. Dispositif ayant une première horloge *C* et adapté pour recevoir un signal de temps global *G* et échanger des messages par le biais d'un réseau de communication (4), comprenant

- un moyen de calcul d'un décalage d'horloge basé sur une vue commune $x_G(t_i)$ entre la première horloge *C* et une seconde horloge *S* en fonction des temps de réception $S(t_i)$, $C(t_i)$ du signal de temps global $G(t_i)$ à l'emplacement des première et seconde horloges C, S,
- un moyen de calcul d'un décalage d'horloge de réseau $x_T(t_n)$ entre la première horloge *C* et la seconde horloge *S* en fonction des temps de transmission $S_1(t_k)$, $C_2(t_n)$ et des temps de réception $C_1(t_k)$, $S_2(t_n)$ de messages critiques dans le temps échangés entre les première et seconde horloges *C, S*, et
- un moyen de combinaison du décalage d'horloge basé sur une vue commune $x_G(t_i)$ et du décalage d'horloge de réseau $x_T(t_n)$ pour estimer un décalage temporel $x$ entre la première horloge *C* et la seconde horloge *S*.

Fig. 1

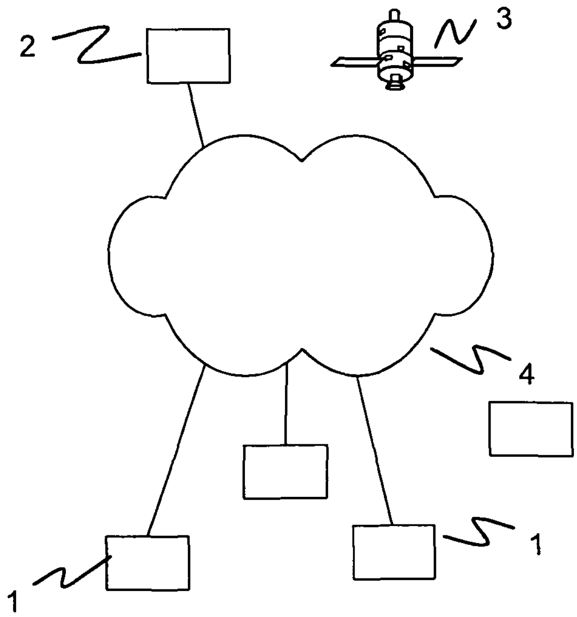


Fig. 2

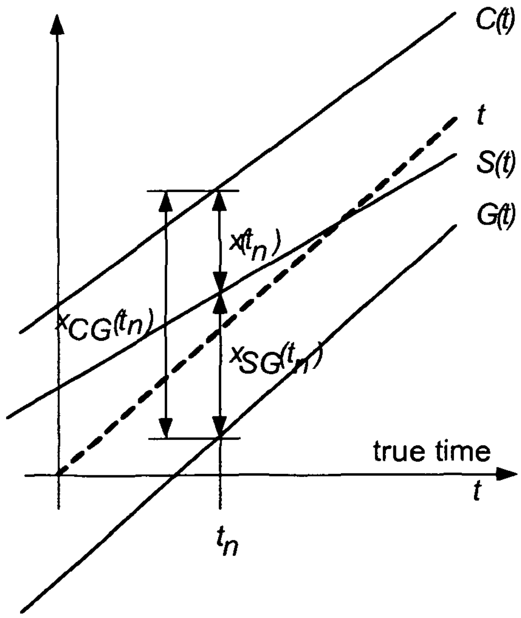


Fig. 3